# EUROPÄISCHE PATENTANMELDUNG

(11) **EP 2 093 026 A1**
(43) Veröffentlichungstag der Anmeldung: **26.08.2009**
(21) Anmeldenummer: 09002312.8
(22) Anmeldetag: 19.02.2009
(51) Int. Cl.: B25J 5/00, F16L 55/26

(54) **Kanal-Inspektionsroboter mit digitaler Datenübertragung**

(30) Priorität: 21.02.2008 DE 102008010438
(71) Anmelder: Weuffen, Dieter, 88239 Wangen/Neuravensburg (DE)
(72) Erfinder: Weuffen, Dieter, 88239 Wangen/Neuravensburg (DE)
(74) Vertreter: Riebling, Peter

(57) **Zusammenfassung**

Fahrroboter (7) für ober- und/oder unterirdische Inspektions- und Sanierungsaufgaben bestehend aus einem Chassis mit mindestens einem Antriebsmotor (12), der Antriebsräder antreibt, sowie mindestens einer Videokamera (10) und gegebenenfalls Sensoren (13) und Aktoren, wobei die Stromversorgung und die Signalzu- und -ableitung drahtgebunden über ein Verbindungskabel (6) erfolgt, welches den Fahrroboter (7) mit einem entfernt angeordneten Inspektionsfahrzeug (3) verbindet, dadurch gekennzeichnet, dass das Verbindungskabel (6) mindestens als Zweidrahtkabel ausgebildet ist und dass die Datenübertragung vom Fahrroboter (7) zum Inspektionsfahrzeug (3) über eine Modemverbindung erfolgt.

## Beschreibung

Die Erfindung betrifft einen Kanal-Inspektionsroboter mit digitaler Datenübertragung nach dem Oberbegriff des Patentanspruches 1.

Die Erfindung geht hierbei von bekannten Kanal-Inspektionsrobotern aus, die dafür geeignet sind, auf der Sohle eines Hauptkanals (eines Abwasser- oder Frischwasser-Kanals) verfahren zu werden, um dort Inspektionsaufgaben auszuführen. Neben derartigen Kanal-Inspektionsrobotern betrifft die vorliegende Erfindung auch die sogenannten Sanierungsroboter und alle anderen in derartigen Hauptkanälen verfahrbaren Inspektions- und Sanierungsfahrzeuge.

Die Erfindung ist darüber hinaus nicht auf Kanal-Inspektionsroboter beschränkt, sondern betrifft allgemein auch Inspektionsroboter, die geeignet sind, bestimmte außerhalb eines Kanals anfallende Inspektionsaufgaben auszuführen, wie zum Beispiel auch Roboter, die oberirdisch bestimmte Gefahrenpunkte anfahren und visuell oder auch manuell untersuchen. Es handelt sich hierbei um Bombenentschärfungs-, Sprengstoffuntersuchungs- und dergleichen -Roboter.
Bei allen diesen über Fernsteuerung verfahrbaren Robotern ist bekannt, eine Videokamera anzuordnen, bei der die erfassten Videobilder über ein Signalkabel an ein entfernt stehendes Inspektionsfahrzeug abgeleitet und dort ausgewertet oder mindestens gespeichert werden.

Nachteil bei der bekannten Technik der kabelgebundenen Signalübertragung von einem Roboter zu einem entfernt angeordneten Fahrzeug ist die störungs- und fehlerbehaftete analoge Übertragung von Messwerten und Videosignalen über teure, vieladrige Signalkabel. Ferner besteht das bekannte Problem bei Inspektionsrobotern darin, dass man für die Steuerung verschiedener Module im Inspektionsroboter selbst eine Vielzahl von Signalübertragungsadern benötigt, was dazu führt, dass ein Inspektionsroboter mit einem Kabelbündel von zum Beispiel 20 oder 30 mehr Kabeladern versorgt werden muss.

Nachteil dieser bekannten Technik ist, dass ein relativ großvolumiges, schweres und auch teures Signalkabel verwendet werden muss, um den Inspektionsroboter mit den entsprechenden Signalen zu versehen und auch die Signale, die vom Inspektionsroboter erfasst werden, an das entfernt stehende Inspektionsfahrzeug abzuleiten und dort umzuwandeln.

Der weitere Nachteil beim Stand der Technik ist, dass die Kabellänge der bekannten Signalübertragungskabel stark begrenzt ist. Aufgrund von Phänomenen des Übersprechens, der Kabeldämpfung und des Gewichts der Kabel ist es nicht möglich, ein Kabel von beispielsweise mehr als 300 m zu verwenden, was jedoch bei Inspektionsaufgaben mit entfernt vom Inspektionsfahrzeug eingesetzten Inspektionsrobotern gewünscht ist.

Bei den bekannten analogen Signalkabeln besteht im Übrigen der Nachteil, dass aufgrund der Kabeldämpfung eine starke Verschlechterung der Videoqualität bei Kabellängen über 100 m in Kauf genommen werden muss, was dazu führt, dass die Kanalinspektionsfahrzeuge beispielsweise nur mit Kabellängen von zum Beispiel 100 m ausgerüstet sind und dann von Schacht zu Schacht des Hauptkanals verfahren werden müssen, um für eine Fortsetzung der Inspektionsaufgabe dort erneut den unterirdisch verfahrbaren Inspektionsroboter zum Einsatz zu bringen.

Damit bestehen hohe Aufwendungen bei der Öffnung eines Kanalschachtes am Hauptkanal, bei der Neupositionierung des Inspektionsfahrzeuges und beim Ablassen des Fahrroboters in den Kanal.

Aufgrund der Zusammensetzung des vieladrigen analogen Signalkabels bestehen auch Alterungs- und Verschleißprobleme. Beispielsweise ist es bekannt, dass derartige Kabel nur eine maximale Lebensdauer von 5 Jahren unter den erschwerten Bedingungen im Kanal haben, weil sie stark bruchgefährdet sind, einer hohen Feuchtigkeit unterliegen und im Übrigen durch schmutzbehaftete Abwässer gezogen werden, was insgesamt den Kabelmantel stark beansprucht.

Weil diese vieladrigen Signalkabel auf Biegung beansprucht werden, besteht auch die Gefahr des internen Kabelbruchs, was schwer erkennbar ist und was dazu führt, dass ein komplettes Signalkabel mit zum Beispiel 20 Signaladern ausgewechselt werden muss, wenn nur eine einzige Signalader bricht.

Analoge Signalkabel, die aus mehradrigen Signalleitungen bestehen, sind nur sehr schlecht biegbar, und daher bestehen große Probleme, bei der Einführung und der Mitführung dieses schweren Signalkabels von Seiten des Fahrroboters. Er muss einen besonders starken Fahrantrieb haben, um überhaupt das schwere Signalkabel und gegebenenfalls noch weitere Leitungen, wie zum Beispiel Hochdruck- oder Druckluftleitungen mitführen zu können.

Damit besteht der weitere Nachteil, dass der Inspektionsroboter einen sehr starken und großbauenden Fahrantrieb benötigt und eine entsprechende, mehrere Ampere übertragende Stromversorgung, was zu einem großen Raumbedarf des Fahrroboters mit entsprechenden Wärmeverlusten führt. Daher ist es nicht möglich, einen solchen Inspektionsroboter kleiner zu bauen, mit dem Ziel, dass beispielsweise auch Kanäle mit einer Nennweite von bis zu 10 cm befahren werden können, weil aufgrund des großvolumigen Fahrantriebes und der damit verbundenen Hochleistungsantriebsmotoren eine Unterschreitung bestimmter Außenabmessungen des Fahrroboters nicht möglich ist.

Weiterer Nachteil beim Stand der Technik ist, dass bei der Verwendung von mehreren analogen Videokameras auch entsprechende mehrfache Koax-Kabel im Signalbündel mitgeführt werden müssen, was dazu führt, dass die Außenabmessungen eines solchen Signalkabels noch wesentlich größer sind, sodass ein solches Signalkabel insgesamt noch bruchgefährdeter ist und im Übrigen gegenüber erhöhten Feuchtigkeitseinflüssen noch empfindlicher ist.

Der Erfindung liegt deshalb die Aufgabe zugrunde, einen Inspektions- oder Sanierungsroboter so weiterzubilden, dass bei kleineren Abmessungen des Roboters eine gleich große oder sogar verbesserte Fahrleistung (Drehmoment) bei größerer Reichweite (Entfernung vom oberirdischen Inspektionsfahrzeug) gewährleistet ist.

Zur Lösung der gestellten Aufgabe ist die Erfindung **dadurch gekennzeichnet, dass** die Datenübertragung vom Fahrroboter auf das entfernt angeordnete Inspektionsfahrzeug über mindestens ein Zweidrahtkabel erfolgt.

Mit der gegebenen technischen Lehre ergibt sich der wesentliche Vorteil, dass nun ein eine Vielzahl von Kabeladern umfassendes Kabelbündel eingespart werden und nur noch ein einziges Zweidrahtkabel für die komplexe Datenübertragung zwischen dem Fahrroboter und dem entfernt angeordneten Inspektionsfahrzeug notwendig ist.

Für die Datenübertragung über das Zweidrahtkabel werden bezüglich der beanspruchten Modemverbindung verschiedene Datenübertragungsverfahren als erfindungswesentlich beansprucht, die nachfolgend geschildert werden.

In einer ersten Ausführungsform der vorliegenden Erfindung wird es bevorzugt, wenn in dem Fahrroboter ein DSL-Modem angeordnet ist, welches eine Datenübertragung über das Zweidrahtkabel ausführt und auf der Empfängerseite (im Inspektionsfahrzeug) ebenfalls ein DSL-Modem angeordnet ist, welches die übertragenen Daten wieder zurückverwandelt und einer Weiterverarbeitung zuführt.

Unter dem Begriff "Zweidrahtkabel" werden hierbei verschiedene Kabeltypen verstanden.

In einer ersten Ausführungsform handelt es sich bei dem Zweidrahtkabel um ein verdrilltes Zweidrahtkabel (twisted pair), welches in der Datenübertragungstechnik bekannt ist. In einer anderen Ausgestaltung ist das Zweidrahtkabel als Koax-Kabel ausgebildet und hat deshalb ebenfalls zwei Übertragungsleitungen.

Unter dem Begriff eines DSL-Modems werden folgende Datenübertragungsverfahren verstanden:
Es gibt verschiedene Arten von DSL-Techniken, die unter der Bezeichnung "DSL" oder "xDSL" (x als Platzhalter für das spezifische Verfahren) zusammengefasst werden:
   1. ADSL - Asymmetric Digital Subscriber Line, eine asymmetrische Datenübertragungstechnologie, zum Beispiel mit Datenübertragungsraten von 8 Mbit/s zum Teilnehmer (Downstream) und 1 Mbit/s in der Gegenrichtung (Upstream);
   2. ADSL2+ - Eine erweiterte Form von ADSL mit Datenübertragungsraten von bis zu 25 Mbit/s zum Teilnehmer (Downstream) und bis zu 3,5 Mbit/s in der Gegenrichtung (Upstream), die Geschwindigkeit wird dynamisch ausgehandelt;
   3. HDSL - High Data Rate Digital Subscriber Line, eine symmetrische Datenübertragungstechnik mit Datenübertragungsraten zwischen 1,54 und 2,04 Mbit/s;
   4. SDSL (G.SHDSL) - Symmetrical Digital Subscriber Line, eine symmetrische Datenübertragungstechnologie mit Datenübertragungsraten von bis zu 3 Mbit/s symmetrisch, das heißt sowohl in Empfangs- wie in Senderichtung; bei vieradriger Anschaltung (zwei Kupfer-Doppeladern) können maximal 4 Mbit/s übertragen werden. Alternativ kann auch die Reichweite auf Kosten der Datenrate erhöht werden.
   5. VDSL bzw. VDSL2- Very High Data Rate Digital Subscriber Line, eine Datenübertragungstechnologie (über Glasfaserkabel), die theoretisch Datenübertragungsraten von bis zu 210 Mbit/s im symmetrischen Betrieb bietet.
   6. UADSL - Universal Asymmetric Digital Subscriber Line
   7. Andere als "DSL" bezeichnete Verfahren
   8. ISDN Digital Subscriber Line verwendet vorhandene ISDN-Technik und ermöglicht Datenraten bis zu 160 kbit/s
   9. cableDSL - Markenname der TELES AG für einen speziellen Internetzugang über Kabelanschluss
   10. skyDSL - Markenname der TELES AG für einen europaweit flächendeckend verfügbaren Internetzugang über Satellit mit bis zu 24 Mbit/s im Downstream
   11.T-DSL via Satellit - Markenname der Deutschen Telekom für einen Internetzugang über Satellit. Der Zugang über den Satelliten ermöglicht bei den genannten Produkten lediglich den Empfang von Daten, zum Senden wird ein herkömmliches Modem oder eine ISDN-Verbindung verwendet.
   12. Wireless Digital Subscriber Line (WDSL) verwendet Funk-Technik und ermöglicht Datenraten bis zu 512 Mbit/s. Es wird unter diesen Namen von der Firma FPS InformationsSysteme GmbH genutzt.
   13. mvoxDSL - Markenname für ein Internet via Funk - Angebot der Firma mvox AG
   14. FlyingDSL - Markenname für ein Internet via Funk - Angebot der Firma Televersa online
   15. PortableDSL - Markenname für Internet via Funk - Angebot der Firmen isomedia und Airdata
   16.AvioDSL - Markenname für Internet via Funk - Angebot der Firma overturn technologies gmbh

Besonders bevorzugt wird wegen der hohen Datenübertragungsrate und der geringen Dämpfung der Signale ein VDSL2-Übertragungsverfahren, welches in der Lage ist, mit einem DMT (diskreten Multiton) oder QAM (Quadratur Amplituden Modulation) Technologie zu arbeiten.

Das DMT-Verfahren ist ein Verfahren, um das DSL-Signal zu trennen und aufzuspalten, um so den nutzbaren Frequenzbereich in einzelne multiple, schmale Frequenzbänder aufzuteilen oder in Töne aufzuteilen.

Es werden insgesamt 4.096 Töne verwendet, die jeweils um eine Bandbreite von 4 KHz oder 8 KHz voneinander entfernt angeordnet sind. Jeder Ton kann sowohl für die Abwärtsrichtung als auch für die Aufwärtsrichtung verwendet werden, und somit werden Upstream- und Downstreambänder definiert, die insgesamt dann 8 verschiedene Profile für unterschiedliche Anwendungsgebiete definieren.

Wichtig ist, dass bei der störbehafteten und relativ mit einer großen Dämpfung unterliegenden weiten Entfernungsstrecke zwischen dem Fahrroboter und dem Inspektionsfahrzeug nun ein besonders sicheres (im Sinne einer störungsfreien Datenübertragung) Übertragungsverfahren gewählt wird. Bei den bevorzugten VDSL2-Verfahren werden nämlich die oben genannten Töne von dem fahrzeugseitigen DSL-Modem erzeugt und über das Zweidrahtkabel geschickt und im weit entfernt angeordneten Inspektionsfahrzeug wird untersucht, welche Töne überhaupt ankommen. Es wird als nicht Wert darauf gelegt, dass eine vollkommen 100%-ige Datenübertragung stattfindet, sondern es wird adaptiv gesucht, welche Töne mit welcher Qualität ankommen, und nur diese auswertbaren Töne werden für die Signalverarbeitung im Inspektionsfahrzeug verwendet.

Damit ist es erstmals möglich, Abstände zwischen einem Inspektionsfahrzeug und einem Fahrroboter von mehr als 5 km zu verwenden, was bisher nicht möglich war. Damit ist es möglich, ein sehr schmales und leichtes Zweidrahtkabel im Kanal zu verlegen. Ein solches Zweidrahtkabel hat beispielsweise einen Durchmesser von 3 mm bis 6 mm und hat ein Längengewicht von zum Beispiel 20 bis 40 g/Kabelmeter. Ein solches Kabel entspricht praktisch dem herkömmlich bekannten Ethernet-Kabel, welches in seinem Durchmesser und seinem Längengewicht bekannt ist und welches bevorzugt auch hier eingesetzt wird.

Ein solches Ethernet-Kabel hat sogar 4 verdrillte Zweidrahtleitungen, die bei dem vorliegenden Einsatzgebiet nicht notwendig sind, deswegen liegt das Kabelgewicht des erfindungsgemäß verwendeten Zweidrahtkabels noch um die Hälfte unter dem Gewicht eines Ethernet-Kabels.

Es handelt sich also um einfache Zweidrahtleitungen, wie sie auch im Telefonbau eingesetzt werden, und daraus ergibt sich der wesentliche Vorteil bei der Verwendung eines solchen Kabels im Kanal.

Durch die Verwendung eines sehr dünnen und leichten Kabels ist es nun erstmals möglich, sehr große Entfernungen zwischen dem Inspektionsfahrzeug und dem kanalseitig angeordneten Fahrroboter vorzusehen, was dazu führt, dass der Kanalroboter über Entfernungen von bis zu 3 km im Kanal verfahren werden kann, ohne dass Störungen bei der Signalübertragung entstehen.

Weiterer Vorteil ist, dass ein solches Zweidrahtkabel außerordentlich bruchstabil und knickstabil ist und unempfindlich gegen Feuchtigkeitseinflüsse und Alterungseinflüsse ist.

Weil eine annähernd digitale Übertragung stattfindet (nämlich über senderseitig und empfängerseitig angeordnete DSL-Modems), ist der Signalverlust minimal, auch wenn große Kabellängen verwendet werden.

Damit ist die übertragene Videoqualität von der roboterseitig angeordneten Videokamera auf das Empfangsmodem im Inspektionsfahrzeug nur gering bedämpft. Die Videoqualität hängt deshalb nicht mehr von der Leitungslänge ab, sondern nur noch von der Datenkompression, die sender- und empfängerseitig verwendet wird.

Weiterer Vorteil ist, dass wegen der empfängerseitig erzeugten digitalen Videodaten es nun erstmals möglich ist, die digitalen Daten unmittelbar in einem PC selbst zu verarbeiten. Damit besteht auch die Möglichkeit der Weiterverarbeitung in Form der Ethernet-Technik, was bedeutet, dass man mit den dergestalt verarbeiteten Daten auch einen Internetanschluss erreichen kann und die Daten unmittelbar über einen Internetanschluss drahtlos weitersenden kann.

Damit eröffnen sich Möglichkeiten für eine Fernwartung, so dass es nicht mehr erforderlich ist, eine Bedienungsperson im oberirdisch angeordneten Inspektionsfahrzeug vorzusehen.

Weil das im Roboter angeordnete DSL-Modem eine hohe Rechenleistung erfordert, ist es möglich, die hohe Rechenleistung auch für andere Rechenaufgaben zu verwenden, beispielsweise für Navigationsaufgaben, für Kanalortungs- oder Kanalerkennungsaufgaben und für Sanierungsaufgaben. Damit ist es möglich, eine Vielzahl von Signalen über das Zweidrahtkabel zu übertragen, ohne dass Signalstörungen zu befürchten sind.

Damit ist auch eine Abwärtskompatibilität möglich, weil man die bisher in den Fahrzeugen schon angeordneten analogen Module abwärts kompatibel zu der digitalen Technik gestalten kann, indem entsprechende Schnittstellenmodule dazwischengeschaltet werden.

Weiterer Vorteil der Erfindung liegt darin, dass aufgrund des geringen Kabelgewichtes, welches der Fahrroboter mitschleifen muss, es nun erstmals möglich ist, den Antrieb sehr klein und sparsam zu dimensionieren, was einerseits mit einem geringeren Stromverbrauch und einer entsprechend geringer dimensionierten Spannungsversorgung eingeht und andererseits insgesamt auch mit geringeren Abmessungen des Fahrroboters verbunden ist. Damit ist es erstmals möglich, den Fahrroboter mit geringerem Drehmoment bei gleicher Fahrleistung auszustatten, so dass der Fahrroboter auch in klein dimensionierte Leitungen (z. B. DN 100-Leitungen oder DN 50-Leitungen) einfahren kann, was bisher noch nicht möglich war.

In einer ersten Ausgestaltung der vorliegenden Erfindung ist es vorgesehen, dass auch die Stromversorgung über das Zweidrahtkabel erfolgt, was erfordert, dass an der Empfängerseite eine entsprechende Auskopplung zwischen der Stromversorgung und den übertragenen Signalen stattfindet. Ebenso muss diese Auskopplung auf der Seite des Inspektionsfahrzeuges stattfinden.

In einer anderen Ausgestaltung der Erfindung ist es vorgesehen, dass statt eines Zweidrahtkabels ein Vierdrahtkabel verwendet wird, bei dem zwei Adern für die Stromversorgung und zwei Adern für die Signalversorgung verwendet werden. Ein solches Vierdrahtkabel wurde bereits schon vorhin als Ethernet-Kabel bezeichnet, so dass es also ohne Weiteres möglich ist, ein handelsübliches Ethernet-Kabel zu verwenden, bei dem also zwei Drähte für die Stromversorgung und zwei Drähte für die Signalführung verwendet werden.

Wichtig ist, dass wegen der Digitalisierung auf der Kabelstrecke alle Signale über das Zweidrahtkabel übertragen werden können, d. h. nicht nur die Videosignale, sondern auch alle Sensorsignale, Ortungssignale und sämtliche anderen Signale, die im Bereich des Fahrroboters anfallen.

Die Übertragung ist im Übrigen bidirektional, d. h. man kann den Roboter auch von Seiten des Inspektionsfahrzeuges steuern, was bisher nur mit großem Aufwand im Hinblick auf die verwendeten Signalkabel möglich war.

Als Protokolle für die Datenübertragung über die Zweidrahtleitung können verschiedenartige Protokolle verwendet werden, die hier nicht abschließend aufgezählt werden und nur beispielhaft zu verstehen sind.

### Protokolle für ADSL-Technologien sind beispielsweise:

PPP over Ethernet-Protokoll (PPPoE), das die Kapselung von PPP-Paketen in Ethernet-Frames regelt.

PPPoE wird zum Beispiel von der Deutschen Telekom für Telekom-DSL-Anschlüsse (auch für T-DSL-Resale-Anschlüsse sowie gar für T-DSL Business Symmetrisch auf SDSL-Basis) verwendet, an diesen Telekom-DSL-Anschlüssen können mehrere PPPoE-Verbindungen zu unterschiedlichen Internetzugangsanbietern gleichzeitig bestehen.

PPP over ATM-Protokoll (PPPoA), das die Kapselung von PPP-Paketen in ATM-Zellen regelt. TCP/IP-Protokoll oder UDP-Protokoll oder FTP-Protokoll

Point-to-Point Tunneling Protocol (PPTP), das einen Tunnel über eine PPP-Verbindung herstellt. PPTP wird häufig in Österreich, Italien und Belgien, selten jedoch in Deutschland verwendet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

### Es zeigen:

- Figur 1:: schematisiert eine Anordnung eines erfindungsgemäßen Fahrroboters mit der neuartigen Signalübertragung
- Figur 2:: ein Blockschaltbild der im Fahrroboter angeordneten Module
- Figur 3:: ein Blockschaltbild der Verbindung eines Fahrroboters mit den Modulen in einem entfernt angeordneten Inspektionsfahrzeug
- Figur 4:: ein Blockschaltbild eines Bausteins zur Umsetzung von Videodaten mit dem Ziel, diese über ein DSL-Modem auf eine Zweidrahtleitung zu übertragen

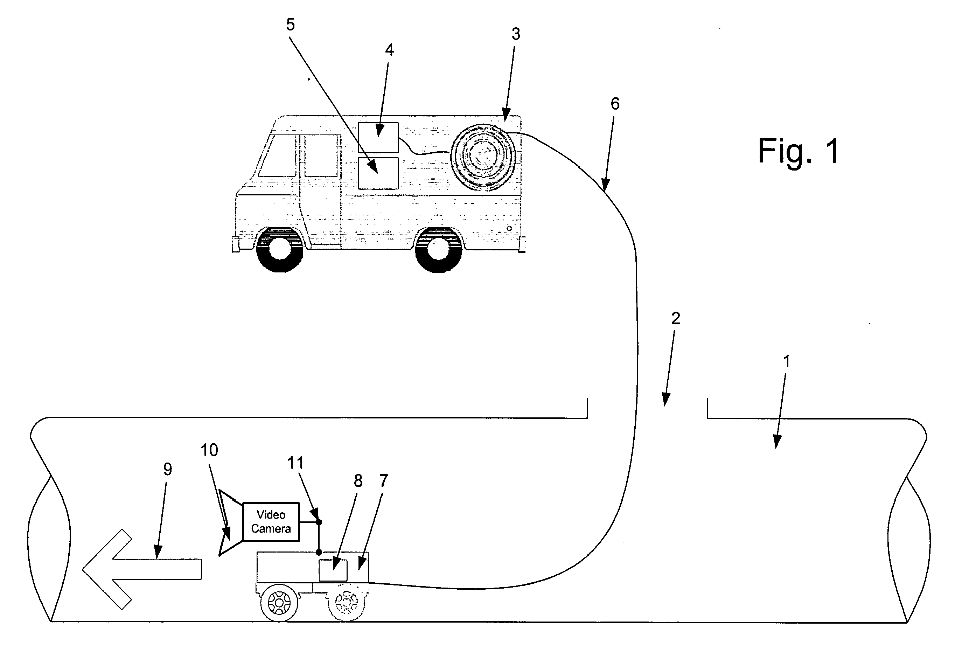

In Figur 1 ist beispielhaft dargestellt, dass im Bereich eines Hauptkanals 1 über einen Schacht 2 ein Fahrroboter 7 abgelassen ist, der mit einem eigenen Fahrerantrieb ausgerüstet ist. Er ist über das erfindungsgemäße Zweidrahtkabel 6 mit einem oberirdisch angeordneten Inspektionsfahrzeug 3 verbunden und bewegt sich beispielsweise aufgrund seines Antriebes in Pfeilrichtung 9.

Im oberirdisch angeordneten Inspektionsfahrzeug 3 ist eine Steuereinheit 4 angeordnet, der ein PC-System 5 gegebenenfalls mit einem Monitor zugeordnet ist.

Ebenso ist im unterirdisch verfahrbaren Fahrroboter 7 eine Steuereinheit 8 angeordnet, welche die Funktionen im Fahrroboter 7 steuert und im Übrigen die Videosignale von einer oder mehreren Videokameras 10 verarbeitet, die auf einem Schwenkgestell 11 angeordnet sind und in beliebiger Weise verschwenkt und bedient werden können.

Es ist nicht dargestellt, dass der Fahrroboter 7 auch anders ausgebildet sein kann. So kann es zum Beispiel vorgesehen sein, dass das Schwenkgestell 11 als Schwenkarm oder als Verschiebeleitung ausgebildet ist, so dass der Fahrroboter in die Lage versetzt wird, die eine oder die mehreren Videokameras 10 in bestimmte Anschlüsse von Nebenkanälen einzuschieben und dort Inspektionsarbeiten auszuführen.

Ferner ist nicht dargestellt, dass der Fahrroboter 7 auch als Sanierungsroboter ausgebildet sein kann und auch oberirdisch betrieben werden kann.

Wichtig ist, dass zwischen dem Inspektionsfahrzeug 3 und dem Fahrroboter 7 lediglich ein Zweidrahtkabel 6 verlegt ist, welches eine maximale Leitungslänge von 5 km aufweisen kann.

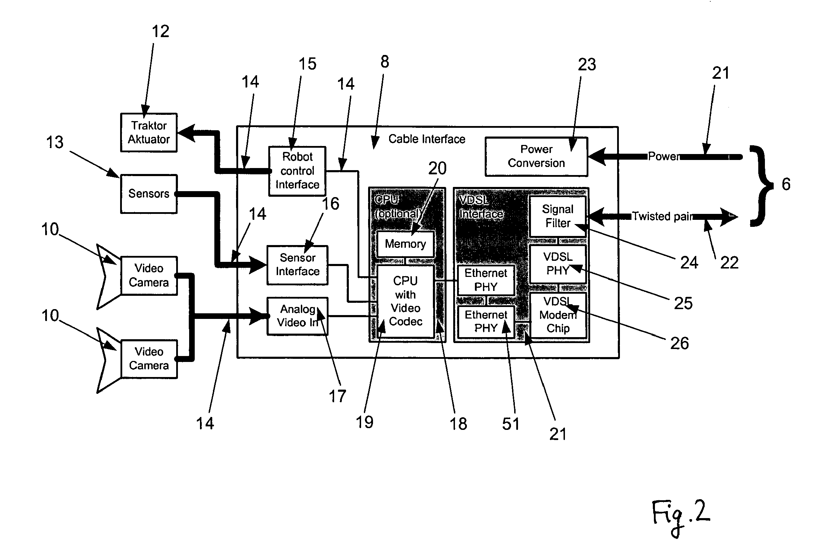

In Figur 2 sind die weiteren Module, die in einem solchen Fahrroboter 7 angeordnet sind, beispielhaft dargestellt. Es ist erkennbar, dass der Antriebsmotor 12 über eine Signalleitung 14 mit einer Antriebssteuerung 15 verbunden ist, die ihrerseits über eine Signalleitung 14 mit dem Ethernet-Umsetzer 18 verbunden ist.

Ebenso sind die ein oder mehreren Sensoren 13 über zugeordnete Signalleitungen 14 mit einem Sensor-Interface 16 verbunden, welcher seinerseits wiederum über entsprechende Signalleitungen mit dem Ethernet-Umsetzer 18 verbunden ist.

Gleiches gilt für die ein oder mehreren Video-Kameras 10, die über Signalleitungen 14 mit einem Video-Interface 17 verbunden sind, welches seinerseits die Signale in ein Video-Kompressionsmodul 19 einspeist.

Die Figur 2 zeigt, dass im Ethernet-Umsetzer 18 auch eine Speichereinheit 20 angeordnet sein kann, die als Langzeitspeicher ausgebildet ist. Ein solcher Langzeitspeicher kann als Flash-Speicher oder als digitale Festplatte ausgebildet sein.

Auf diese Speichereinheit 20 werden beispielsweise alle Sensorsignale und alle Videosignale aufgezeichnet und einer späteren Auswertung zugeführt.

Der Ethernet-Umsetzer 18 dient zur Umsetzung sämtlicher Signale, um diese in einer digital auswertbare Form zu bringen, um die so umcodierten Signale einem DSL-Modem 21 zuzuführen.

Dieses DSL-Modem 21 weist eine Reihe von digitalen Leitungstreibern 51 auf, die eine Codeanpassung der von dem Ethernet-Umsetzer 18 erzeugten Signale auf die vom DSL-Modem 21 geforderten Signale ausführen.

Die von den digitalen Leitungstreibern 51 erzeugten Signale werden somit einem V-DSL-Modem-Chip 26 eingespeist, der wiederum auf einen digitalen Leitungstreiber 25 arbeitet und dieser auf einen Signalfilter 24.

Der Signalfilter 24 ist die Entkopplungsstufe, und von diesem Signalfilter aus ist das erfindungsgemäße Zweidrahtkabel 6 angeschlossen, welches im gezeigten Ausführungsbeispiel aus einer Zweidrahtleitung 22 und einem aus zwei Drähten bestehenden Stromversorgungskabel 21 besteht.
Das Stromversorgungskabel 21 mündet in das Netzteil 23 und versorgt dieses mit Strom, welches Netzteil dann wiederum die Antriebsmotoren 12 mit Strom versorgt und im Übrigen auch alle anderen Module im Bereich der Steuereinheit 8 des Fahrroboters 7.

Im vorliegenden Ausführungsbeispiel der Figur 2 wird nur eine bestimmte Ausführungsform eines DSL-Modems beschrieben, das einen DSL-Modem-Chip 26 verwendet. Es versteht sich von selbst und ist für den Fachmann klar, dass auch andere DSL-Übertragungsverfahren verwendet werden können, die vorstehend im allgemeinen Beschreibungsteil erwähnt wurden.

Auf der Seite des Inspektionsfahrzeuges 3 ist in der dortigen Steuereinheit 4 wiederum eine Entkopplungsstufe 27 angeordnet, die mit der Entkopplungsstufe gemäß dem Signalfilter 24 im Roboterfahrzeug übereinstimmt. Es ist klar, dass das DSL-Modem auf der Seite des Fahrroboters spiegelbildlich und gleich ausgebildet ist, wie das in dem Inspektionsfahrzeug 7 angeordnete DSL-Modem 31.

Es bedarf daher lediglich der Beschreibung der Bausteine eines einzigen DSL-Modems, weil die im Fahrzeug angeordneten Bausteine des dortigen DSL-Modems 31 gleich ausgebildet sind. So sind zum Beispiel ein Signalfilter 28 für die Aufbereitung des Videosignals vorhanden, ebenso wie ein Leitungstreiber 25, ein DSL-Modem-Chip 26 und dergleichen Bausteine mehr.

Wichtig ist, dass die Signalaufbereitung ermöglicht, die so erzeugten Signale auf eine Ethernet-Leitung 35 im Inspektionsfahrzeug zu leiten, und über den digitalen Anschluss ein daran angeschlossenes PC-System anzusteuern. Damit ergibt sich die Möglichkeit, dass mit der Einspeisung in eine Ethernet-Leitung 35 auch ein unmittelbarer Zugang zum Internet geschaffen wird, so dass auch über das PC-System 5 eine Fernwartung und eine Fernbedienung des Fahrroboters 7 über das Internet möglich ist.

Die in den DSL-Modem 31 ausgangsseitig erzeugten Signale werden einer CPU 29 zugeführt, die eine Speichereinheit 20 aufweist und ein Video-Kompressions-/Dekompressions-modul 19, wie es in dieser Form auch auf der Seite des Fahrroboters 7 angeordnet war.

Zusätzlich sind dort ein TV-Interface 32 und ein Beschriftungsgenerator 30 vorgesehen. Der Beschriftungsgenerator 30 sorgt für eine entsprechende Beschriftung der erzeugten digitalen Videobilder, für die Anordnung einer Zeitinformation, einer Ortsinformation und für andere digitale Informationen.

Über das TV-Interface 32 kann auch eine Analogleitung 34 gespeist werden, die einen TV-Monitor 33 mit Bildsignalen versorgt.

Die von einem PC-Interface 51 aufbereiteten Signale der CPU 29 werden über eine digitale Leitung 52 dem vorher erwähnten PC-System 5 eingespeist, welches beispielsweise eine ablauffähige Datenbank 36 und eine Dokumentationssoftware 37 zur Verfügung stellt. Damit können alle empfangenen Sensor- und Videosignale dokumentiert und bearbeitet werden, und die damit erzeugten Signale werden über eine digitale Leitung 38 auf einen digitalen Monitor 39 ausgegeben.

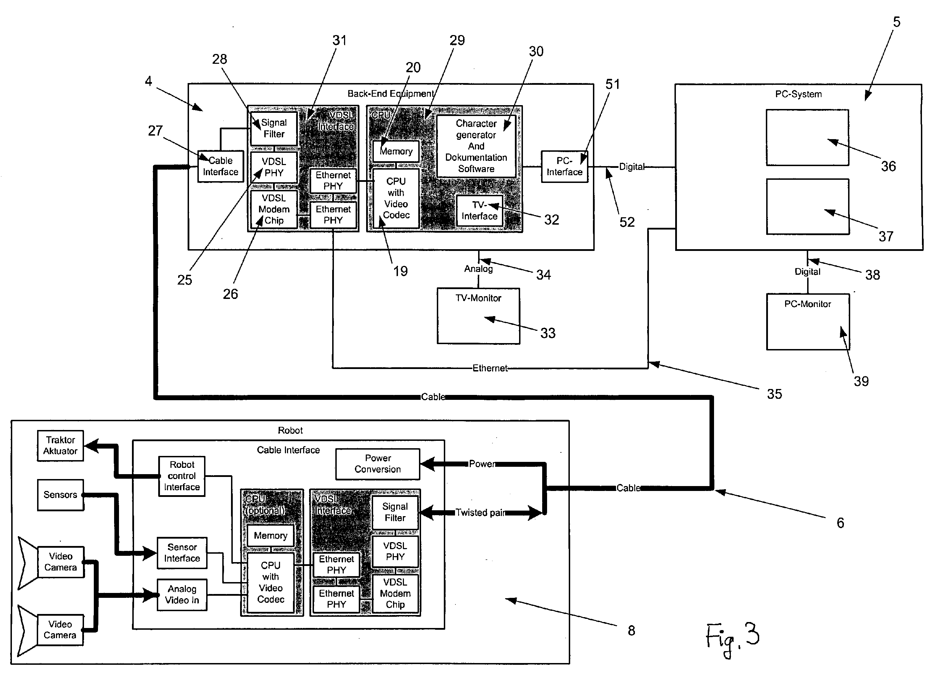

In Figur 3 ist nicht dargestellt, dass die gesamten Module im Inspektionsfahrzeug 3 an eine entsprechende Stromversorgung angeschlossen sind.

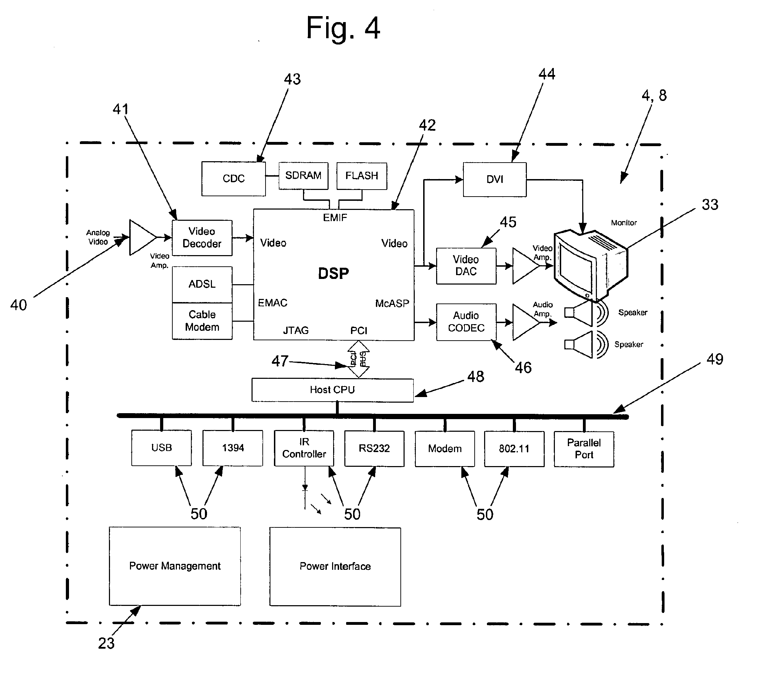

Die Figur 4 zeigt als Ausführungsbeispiel ein Videoumsetzungsmodul, wie es sowohl auf der Seite der oberirdischen Steuereinheit 4 als auch auf der Seite der unterirdischen Steuereinheit 8 angeordnet sein kann.

Neben der Einspeisung von analogen Videosignalen 40 über die dort gezeigte Leitung und einen entsprechenden Videoverstärker können natürlich auch digitale Videosignale verarbeitet werden. Hierzu wird ein Video-Decoder 41 verwendet. Der digitale Eingang für die Videosignale wäre also ausgangsseitig am Video-Decoder 41 angeordnet.

Mit dem Bezugszeichen 43 ist ein digitaler Videorecorder angedeutet, der ebenfalls auf den digitalen Signalprozessor 42 arbeiten kann. Mit Hilfe dieses digitalen Videosignalprozessors 42 werden die Videosignale und gegebenenfalls auch anfallende Audiosignale umgewandelt und komprimiert, um so ausgangsseitig auf ein DVI 44 und auf ein Video-DAC 45 gespeist zu werden. Ebenso kann ein Audio-Umsetzer 46 die Audiosignale umsetzen.

Alle erzeugten Signale können dann auf dem vorher erwähnten TV-Monitor digital dargestellt werden.

Wichtig ist bei dem Blockschaltbild bei Figur 4 noch, dass die Möglichkeit besteht, über einen internen Daten-Bus 47 die Signale auf eine Host-CPU 48 zu leiten und von dieser aus einen internen Bus 49 mit Signalen zu versorgen, um so eine Vielzahl von Schnittstellen-Bausteine 50 anzusteuern. Damit ergibt sich die Möglichkeit, über unterschiedliche Schnittstellen die Signale nach außen hin zugänglich zu machen.

Als Beispiel sind hier die Schnittstellen USB, 1394, IR-Controller, RS232, Modem und 802.11 sowie ein Parallelport angegeben.

In Figur 4 ist auch noch dargestellt, dass das Netzteil 23 ein geschaltetes Netzteil ist, um die Leistungsfähigkeit zu erhöhen.

Insgesamt ergibt sich bei der vorliegenden Erfindung der Vorteil, dass nun besonders störungsfrei über sehr lange Leitungslängen Video-, Audio- und Sensorsignale übertragen werden können und es damit erstmals möglich ist, sehr viel kleinere Fahrroboter 7 mit kleinerem Leistungsbedarf und höherer Videoqualität zu betreiben.

Der in Figur 4 dargestellte Baustein macht die geforderte Videokompression, um die gefordert Datenrate zu erzeugen, die dann über das Zweidrahtkabel von Seiten des Fahrroboters 7 auf das Inspektionsfahrzeug 3 übertragen werden.

Selbstverständlich ist die vorliegende Erfindung nicht auf das hier dargestellte Kompressionsverfahren für Videosignal beschränkt. Es können sämtliche Kompressionsverfahren verwendet werden, wie zum Beispiel JPEG, MJPEG, MPEG oder andere Codec-Verfahren. Ebenso kann eine Kombination aus komprimierter und unkomprimierter Datenübertragung verwendet werden, um so beispielsweise eine komplette Bildszene mit hoher Bildwiederholfrequenz darzustellen und parallel dazu einen bestimmten Bildausschnitt mit hoher Auflösung, aber geringerer Bildwiederholrate.

Ebenso ist wichtig, dass als Übertragungsprotokoll das bekannte TCP/IP-Protokol sowohl intern auf der Seite des Inspektionsfahrzeuges als auch auf der Seite des Fahrroboters 7 verwendet werden kann. Das Übertragungsprotokoll kann sowohl für die interne Kommunikation im Bereich der beiden Steuereinheiten 4, 8 verwendet werden, als auch für die externe Kommunikation mit dem PC-System 5.

Die Erfindung bezieht sich auch auf bereits bestehende, mehradrige und bisher an Fahrrobotern verwendete Kabelbündel. Die erfindungsgemäß vorgeschlagene Modemverbindung über ein solches Kabel bietet den Vorteil, dass die Signalübertragung über mindestens lediglich ein Adernpaar erfolgt und dass die verbleibenden Adernpaare für andere Signal- und Steuerungszwecke verwendet werden können. Außerdem ist es möglich, die neuartige Modemverbindung bei bestehenden Kabelverbindungen nachzurüsten.

Bei der vorliegenden Erfindung werden auch noch folgende Merkmale in Alleinstellung und/oder in Kombination mit den vorher beschriebenen Merkmalen als erfindungswesentlich beansprucht:
1. Ersatz des Schleifrings durch einen induktiven Übertrager für die DSL-Übertragung in der Kabeltrommel.
2. Übertragung von Versorgungsspannung als Wechselstrom zusammen mit dem DSL-Signal über Induktion als Schleifringersatz.
3. Kombination von verlustloser, serieller LVDS-Übertragung für kurze Kabelstrecken (bis ca. 15m) und DSL-Übertragung für das lange Schleppkabel.
4. Vernetzung von mehreren Kameras im Roboter über einen Ethernet-Switch und Verwendung der DSL-Stecke zur gemeinsamen Übertragung der Videoströme

### Zeichnungslegende

- 1: Hauptkanal
- 2: Schacht
- 3: Inspektionsfahrzeug
- 4: Steuereinheit (oberirdisch)
- 5: PC-System
- 6: Zweidrahtkabel
- 7: Fahrroboter
- 8: Steuereinheit (unterirdisch)
- 9: Pfeilrichtung
- 10: Kamera
- 11: Schwenkgestell
- 12: Antriebsmotor
- 13: Sensoren
- 14: Signallleitung
- 15: Antriebssteuerung
- 16: Sensor-Interface
- 17: Video-Interface
- 18: Ethernet-Umsetzer
- 19: Video-Kompressionsmodul
- 20: Speichereinheit
- 21: DSL-Modem
- 22: Zweidraht-Leitung
- 23: Netzteil
- 24: Signalfilter
- 25: Leitungstreiber
- 26: DSL-Modem-Chip
- 27: Entkopplungsstufe
- 28: Signalfilter
- 29: CPU
- 30: Beschriftungsgenera tor
- 31: DSL-Modem
- 32: TV-Interface
- 33: TV-Monitor
- 34: Analoge Leitung
- 35: Ethernet-Leitung
- 36: Datenbank
- 37: Dokumentationssoft ware
- 38: Digitale Leitung
- 39: Monitor
- 40: Analoge Videosignal
- 41: Video-Decoder
- 42: Digitaler Signal-Prozessor
- 43: Digitaler Videorecorder
- 44: DVI
- 45: Video-DAC
- 46: Audio-Umsetzer
- 47: Interner PCI-Bus
- 48: Host-CPU
- 49: Interner Bus
- 50: Schnittstellen-Bausteine
- 51: Digitaler Leitungstreiber
- 52: PC-Interface
- 53: Digitale Leitung

## Patentansprüche

1. Fahrroboter für ober- und/oder unterirdische Inspektions- und Sanierungsaufgaben bestehend aus einem Chassis mit mindestens einem Antriebsmotor, der Antriebsräder antreibt, sowie mindestens einer Videokamera und gegebenenfalls Sensoren und Aktoren, wobei die Stromversorgung und die Signalzu- und -ableitung drahtgebunden über ein Verbindungskabel erfolgt, welches den Fahrroboter mit einem entfernt angeordneten Inspektionsfahrzeug verbindet, **dadurch gekennzeichnet, dass** das Verbindungskabel mindestens als Zweidrahtkabel (6) ausgebildet ist und dass die Datenübertragung vom Fahrroboter (7) zum Inspektionsfahrzeug (3) über eine Modemverbindung (21; 21) erfolgt.

2. Fahrroboter nach Anspruch 1, **dadurch gekennzeichnet, dass** die Modemverbindung aus DSL-Modems (21) besteht.

3. Fahrroboter nach Anspruch 1 oder 2, **dadurch gekennzeichnet, dass** das Zweidrahtkabel ein verdrilltes Zweidrahtkabel (twisted pair) ist.

4. Fahrroboter nach einem der Ansprüche 1 bis 3, **dadurch gekennzeichnet, dass** die Datenübertragung als VDSL bzw. VDSL2- Very High Data Rate Digital Subscriber Line ausgebildet ist und eine Datenübertragungsrate von bis zu 210 Mbit/s im symmetrischen Betrieb bietet.

5. Fahrroboter nach Anspruch 4, **dadurch gekennzeichnet, dass** das Übertragungsverfahren mit einer DMT (diskreten Multiton) oder QAM (Quadratur Amplituden Modulation) Technologie arbeitet.

6. Fahrroboter nach Anspruch 4 oder 5, **dadurch gekennzeichnet, dass** bei dem bevorzugten VDSL2-Verfahren Töne von dem fahrzeugseitigen DSL-Modem (21) erzeugt und über das Zweidrahtkabel (6) geschickt und im weit entfernt angeordneten Inspektionsfahrzeug untersucht wird, welche Töne mit genügender Signalstärke ankommen und nur diese Töne untersucht werden.

7. Fahrroboter nach einem der Ansprüche 1 bis 6, **dadurch gekennzeichnet, dass** das Zweidrahtkabel (6) maximale Leitungslängen im Bereich zwischen 3 bis 5 km aufweist.

8. Fahrroboter nach einem der Ansprüche 1 bis 7, **dadurch gekennzeichnet, dass** die Übertragung von Versorgungsspannung als Wechselstrom zusammen mit dem DSL-Signal über Induktion als Schleifringersatz erfolgt.

9. Fahrroboter nach einem der Ansprüche 1 bis 8, **dadurch gekennzeichnet, dass** das Zweidrahtkabel (6) aus einem Adernpaar besteht, über das Signalübertragung und die Stromversorgung des Fahrroboters (7) erfolgt.

10. Fahrroboter nach einem der Ansprüche 1 bis 8, **dadurch gekennzeichnet, dass** das Zweidrahtkabel (6) aus zwei Adernpaaren besteht, bei dem das eine Adernpaar der Signalübertragung und das andere der Stromversorgung des Fahrroboters (7) dient.

11. Fahrroboter nach einem der Ansprüche 1 bis 10, **dadurch gekennzeichnet, dass** der Schleifring durch einen induktiven Übertrager für die DSL-Übertragung in der Kabeltrommel ersetzt ist.

12. Fahrroboter nach einem der Ansprüche 1 bis 11, **dadurch gekennzeichnet, dass** eine Kombination einer verlustlosen, seriellen LVDS-Übertragung für kurze Kabelstrecken (bis ca. 15m) in Verbindung mit einer DSL-Übertragung für das lange Schleppkabel gegeben ist.

13. Fahrroboter nach einem der Ansprüche 1 bis 12, **dadurch gekennzeichnet, dass** die von digitalen Leitungstreibern (51) erzeugten Signale einem V-DSL-Modem-Chip (26) eingespeist werden, der auf einen digitalen Leitungstreiber (25) arbeitet und dieser auf einen Signalfilter (24) als Entkopplungsstufe an die Zweidrahtleitung (22) angeschlossen ist.
